# EUROPÄISCHE PATENTSCHRIFT

(11) **EP 2 999 566 B1**
(45) Veröffentlichungstag und Bekanntmachung des Hinweises auf die Patenterteilung: **30.01.2019**
(21) Anmeldenummer: 14738345.9
(22) Anmeldetag: 19.05.2014
(51) Int. Cl.: B23C 5/28

(54) **ROTIERENDES WERKZEUG MIT EINER INTERNEN KÜHL- UND/ODER SCHMIERMITTELZUFÜHRUNG**
ROTARY TOOL WITH INTERNAL COOLANT AND/OR LUBRICANT FEED
OUTIL ROTATIF AVEC ALIMENTATION INTERNE DE FLUIDE DE REFROIDISSEMENT ET/OU DE LUBRIFIANT

(30) Priorität: 23.05.2013 AT 1812013 U
(43) Veröffentlichungstag der Anmeldung: 30.03.2016
(73) Patentinhaber: Ceratizit Austria Gesellschaft m.b.H., 6600 Reutte (AT)
(72) Erfinder: SCHLEINKOFER, Uwe, A-6600 Reutte (AT)
(74) Vertreter: Ciesla, Dirk
(86) Internationale Anmeldenummer: PCT/AT2014/000112
(87) Internationale Veröffentlichungsnummer: WO 2014/186812

(56) Entgegenhaltungen:
- WO-A1-01/58632
- WO-A1-2005/118193
- JP-A- 2002 154 032
- JP-A- 2004 167 617
- JP-A- 2006 218 549

## Beschreibung

Die vorliegende Erfindung betrifft ein rotierendes Werkzeug gemäß dem Oberbegriff des unabhängigen Anspruchs 1, insbesondere ein rotierendes Werkzeug mit einer internen Kühl- und/oder Schmiermittelzuführung. Ein derartiges Werkzeug ist aus dem Dokument JP 2006-218549 A bekannt. Es ist bekannt, zur spanenden Bearbeitung von metallischen Werkstoffen rotierende Werkzeuge einzusetzen, die einen Grundkörper aufweisen, dessen eines Ende dazu ausgebildet ist, mit einer Aufnahme einer Bearbeitungsmaschine verbunden zu werden, und dessen anderes Ende mit einer Mehrzahl von Plattensitzen versehen ist, die dazu ausgebildet sind, auswechselbare Schneideinsätze aufzunehmen. Der Grundkörper kann bei derartigen rotierenden Werkzeugen z.B. üblicherweise aus einem Werkzeugstahl gefertigt sein. Die auswechselbaren Schneideinsätze sind üblicherweise aus einem besonders verschleißbeständigen Material ausgebildet, wie insbesondere Hartmetall, Cermet oder einer Schneidkeramik. Die auswechselbaren Schneideinsätze bilden bei solchen rotierenden Werkzeugen die Schneiden, die bei dem Zerspanungsprozess mit dem zu bearbeitenden Werkstoff in Eingriff gelangen. Es sind verschiedene Befestigungsmechanismen zur Befestigung der Schneideinsätze an entsprechenden Sitzen in dem Grundkörper bekannt, insbesondere eine Befestigung über Schrauben, die eine Bohrung in dem Schneideinsatz durchgreifen, und eine Befestigung über Spannpratzen und/oder -keile.
Bei der spanenden Bearbeitung von insbesondere metallischen Werkstoffen mit einem derartigen rotierenden Werkzeug, das insbesondere als Fräswerkzeug ausgebildet sein kann, können hohe Temperaturen auftreten, die zu einem schnellen Verschleiß der Schneideinsätze und zu einer mangelhaften Oberflächenbeschaffenheit des bearbeiteten Werkstücks führen können. Ferner tritt bei manchen Werkstoffen das Problem auf, dass abgetragene Späne dazu neigen, an dem Werkzeug haften zu bleiben, was wiederum zu einem erhöhten Verschleiß und/oder eine mangelhaften Oberflächengüte des Werkstücks führen kann. Um diese unerwünschten Effekte zu reduzieren, werden Kühlmittel, Schmiermittel oder kombinierte Kühlschmiermittel (im Folgenden vereinfachend als Kühlmittel bezeichnet) eingesetzt, die bei dem Zerspanungsprozess bevorzugt in den Bereich der aktiven Schneiden eingebracht werden. Die Kühlmittel können dabei z.B. extern über separate Leitungen zu dem Bereich der aktiven Schneiden zugeführt werden oder über eine interne Kühlmittelzuführung über entsprechende in dem Werkzeug ausgebildete Kanäle.

JP 2006-218549 A beschreibt ein rotierendes Zerspanungswerkzeug mit einem ersten Kanal zum Zuführen eines Zerspanungsfluids in das Innere eines Werkzeughauptkörpers, mehreren zweiten Kanälen, die zu jeweiligen Schneideinsätzen münden, und mehreren Verbindungskanälen, die den ersten Kanal jeweils gekrümmt mit einem zweiten Kanal verbinden.

WO 01/58632 A1 beschreibt ein Fräswerkzeug mit einem Grundkörper, der eine Mehrzahl von Sitzen zur radial gespannten Befestigung von auswechselbaren Schneideinsätzen aufweist. Es ist eine interne Kühl- und/oder Schmiermittelzuführung vorgesehen, über die Kühl- und/oder Schmiermittel zu den Schneideinsätzen zugeführt wird. Das Kühlmittel wird über eine zentrale Bohrung zugeführt und im Inneren des Fräswerkzeug abrupt umgelenkt, bevor es in Richtung zu den Schneideinsätzen austreten kann.

Speziell bei Anwendungsfällen, bei denen eine Verwendung von besonders geringen Mengen an Kühl- und/oder Schmiermittel erfordert ist (auch als Minimalmengenkühlung bzw. -schmierung bezeichnet), kann eine Entmischung des zugeführten Kühl- und/oder Schmiermittels auftreten.

Es ist Aufgabe der vorliegenden Erfindung, ein verbessertes rotierendes Werkzeug bereitzustellen.

Die Aufgabe wird durch ein rotierendes Werkzeug zur spanenden Bearbeitung nach Anspruch 1 gelöst. Vorteilhafte Weiterbildungen sind in den abhängigen Ansprüchen angegeben.

Durch die trichterförmige Ausnehmung in dem Grundkörper, die sich zu dem Kühlmittelkanal hin verjüngt, in Kombination mit dem in diese ragenden Vorsprung des Deckels ist eine interne Kühlmittelzuführung bereitgestellt, die das zugeführte Kühlmittel frei von abrupten Richtungs- und/oder Querschnittsänderungen zu den Kühlmittelaustrittsbereichen leiten kann. Es ist somit eine reibungsarme Kühlmittelförderung bereitgestellt, bei der auftretende Energieverluste minimiert sind. Ferner kann durch eine solche Kühlmittelförderung eine Entmischung des Kühlmittels zuverlässig verhindert werden, die sich bei einer turbulenten Strömung des Kühlmittels aufgrund von abrupten Richtungs- und/oder Querschnittsänderungen in nachteiliger Weise einstellen kann. Dies ist insbesondere bei einer Minimalmengenkühlung und/oder -schmierung wichtig, bei der nur sehr geringe Mengen an Kühlmittel unter sehr niedrigem Druck zum Einsatz kommen. Da die Ausnehmung derart trichterförmig an dem Grundkörper vorgesehen ist und der in die trichterförmige Ausnehmung ragende Vorsprung an dem Deckel ausgebildet ist, kann die vorteilhafte Strömungsführung für das Kühlmittel auch konstruktiv einfach und kostengünstig bereitgestellt werden, indem der Vorsprung und die Ausnehmung in die gewünschte Form gebracht werden, was z.B. durch Fräsen der entsprechenden Oberflächen erfolgen kann. Aufgrund des einfachen Zugangs für die Bearbeitung kann der Strömungsführung für das Kühlmittel auch kostengünstig eine komplexe Form gegeben werden und somit die Strömungsführung für die Anwendung optimiert werden. Es ist ferner ein konstruktiv einfacher Aufbau mit wenigen Komponenten erzielt, was sich ebenfalls positiv auf die Herstellungskosten auswirkt.

Sofern im Rahmen der vorliegenden Beschreibung auf axiale, tangentiale oder radiale Richtungen Bezug genommen wird, beziehen sich diese Ausdrücke immer auf die Rotationsachse des rotierenden Werkzeugs, um die dieses während eines Betriebs rotiert.

Bevorzugt kann die Innenwand der trichterförmigen Ausnehmung in Bezug auf die Rotationsachse des Werkzeugs konvex ausgewölbt ausgebildet sein, so dass eine besonders homogene und gleichmäßige Strömungsführung erreicht wird. Insbesondere kann das Kühlmittel bei einer solchen Ausgestaltung zumindest weitgehend frei von Turbulenzen von einer axialen Zufuhrrichtung in eine radiale Ausstoßrichtung umgelenkt werden.

Gemäß einer Weiterbildung verjüngt sich der Vorsprung in Richtung des Kühlmittelkanals zunehmend. In diesem Fall ist auch auf der Seite des Deckels eine besonders homogene und gleichmäßige Strömungsführung des Kühlmittels bereitgestellt. Bevorzugt kann die Wand des Vorsprungs auf der der Innenwand der trichterförmigen Ausnehmung zugewandten Seite konkav ausgebildet sein, um eine besonders sanfte Umlenkung des Kühlmittels bereitzustellen. Bevorzugt ist die Formgebung des Vorsprungs dabei an die Formgebung der trichterförmigen Ausnehmung angepasst.

Zwischen dem Vorsprung und einer Innenseite der trichterförmigen Ausnehmung ist ein Ringspalt gebildet, dessen Querschnitt sich in einer Ebene, die eine Rotationsachse des Grundkörpers enthält, mit zunehmendem Abstand von dem Kühlmittelkanal verjüngt. Mit anderen Worten nimmt der Abstand zwischen der Innenwand der Ausnehmung und der Wand des Vorsprungs mit zunehmendem Abstand von dem Kühlmittelkanal ab. In diesem Fall wird eine besonders gleichförmige Strömung des Kühlmittels erzielt, bei der die radiale Aufweitung des Kühlmittelstroms aufgrund der Umlenkung in die radiale Richtung durch die abnehmende Breite des zwischen der trichterförmigen Ausnehmung und dem Vorsprung gebildeten Ringspalts kompensiert wird.

Wenn die trichterförmige Ausnehmung frei von sprungartigen Querschnittsveränderungen in den Kühlmittelkanal mündet, werden turbulente Strömungen des Kühlmittels und damit eine Entmischung des Kühlmittels zuverlässig verhindert. In diesem Fall geht der Kühlmittelkanal sanft und glatt in den Ringspalt über, der zwischen der Innenwand der trichterförmigen Ausnehmung und dem Vorsprung gebildet ist.

Gemäß einer Weiterbildung ist die Kühlmittelführung von dem Kühlmittelkanal bis zu den Kühlmittelaustrittsbereichen derart ausgebildet, dass das Kühlmittel frei von abrupten Richtungsänderungen zu den Kühlmittelaustrittsbereichen leitbar ist. Bevorzugt wird das Kühlmittel dabei frei von abrupten Richtungs- und Querschnittsänderungen geleitet. Eine Entmischung des Kühlmittels kann somit zuverlässig unterdrückt werden.

Bevorzugt weist die trichterförmige Ausnehmung einen sich mit zunehmendem Abstand von dem zweiten Ende kontinuierlich verjüngenden Querschnitt auf. Der kontinuierliche Verlauf erzielt eine besonders sanfte Strömungsführung.

Gemäß einer Weiterbildung wirkt der Deckel unter Ausbildung von zu den Kühlmittelaustrittsbereichen verlaufenden Kühlmittelverteilerkanälen mit der trichterförmigen Ausnehmung zusammen. In diesem Fall können die zu den einzelnen Kühlmittelaustrittsbereichen führenden individuellen Kühlmittelverteilerkanäle in einfach zugänglicher Weise in der Oberfläche der trichterförmigen Ausnehmung und/oder der Oberfläche des Vorsprungs eingearbeitet werden.

Bevorzugt sind die Kühlmittelverteilerkanäle durch Strukturen in der trichterförmigen Ausnehmung des Grundkörpers und/oder Strukturen in dem in die Ausnehmung ragenden Vorsprung des Deckels gebildet, so dass eine einfache Fertigung der Kühlmittelverteilerkanäle mit nahezu beliebiger Geometrie durch z.B. Fräsen ermöglicht ist.

Gemäß einer bevorzugten Ausgestaltung ist die Mehrzahl von Sitzen an einem Außenumfang des zweiten Endes angeordnet. Bevorzugt ist die Mehrzahl von Sitzen dazu ausgebildet, auswechselbare Schneideinsätze in einer tangential gespannten Ausrichtung aufzunehmen. Unter einer tangential gespannten Ausrichtung wird eine Ausrichtung verstanden, bei der sich die jeweiligen Haupterstreckungsebenen der Schneideinsätze im Wesentlichen tangential zu dem Außenumfang des Grundkörpers erstrecken. Dabei können sich Befestigungsschrauben zum Befestigen der Schneideinsätze, die Bohrungen in den Schneideinsätzen durchgreifen, bevorzugt im Wesentlichen in radialer Richtung erstrecken.

Gemäß einer Ausgestaltung ist die Mehrzahl von Sitzen derart ausgebildet, dass darin befestigte auswechselbare Schneideinsätze sowohl in einer axialen Richtung als auch in einer radialen Richtung über den Grundkörper hervorstehen.

Gemäß einer Weiterbildung weist das zweite Ende des Grundkörpers einen größeren Außenumfang als das erste Ende auf.

Gemäß einer weiteren bevorzugten Ausgestaltung ist das rotierende Werkzeug ein Fräswerkzeug.

Weitere Vorteile und Zweckmäßigkeiten der Erfindung ergeben sich anhand der nachfolgenden Beschreibung von Ausführungsbeispielen unter Bezugnahme auf die beigefügten Figuren.

Von den Figuren zeigen:
- Fig. 1:: eine perspektivische Darstellung eines rotierenden Werkzeugs gemäß einer Ausführungsform ohne Deckel;
- Fig. 2:: eine Schnittdarstellung im Bereich eines zweiten Endes des Werkzeugs in einer Ebene, die die Rotationsachse des Werkzeugs enthält; und
- Fig. 3:: eine Aufsicht auf das Werkzeug von unten mit montiertem Deckel.

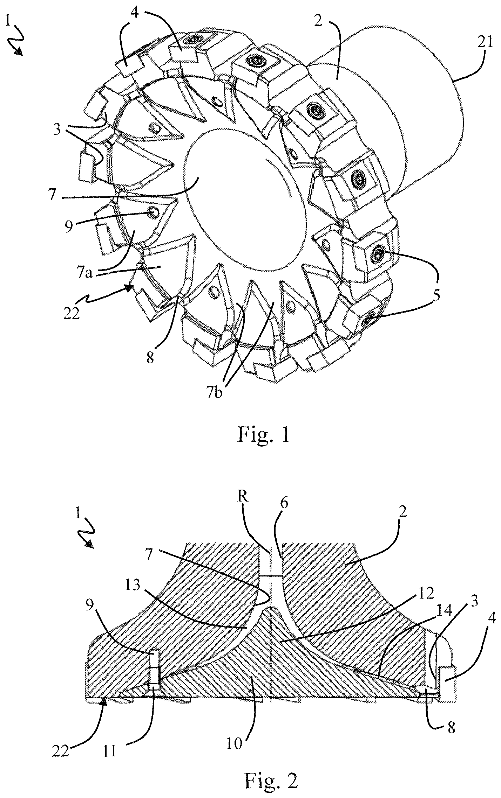

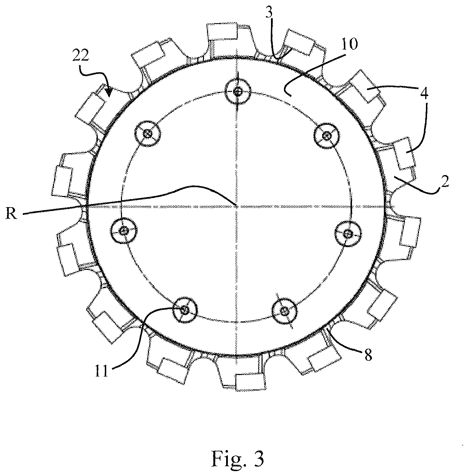

Eine Ausführungsform des rotierenden Werkzeugs 1 wird im Folgenden unter Bezug auf die Fig. 1 bis Fig. 3 eingehender beschrieben.

Bei der dargestellten Ausführungsform ist das rotierende Werkzeug 1 als ein Fräswerkzeug ausgebildet, insbesondere als ein Planfräser. Das Werkzeug 1 weist einen Grundkörper 2 auf, an dem eine Mehrzahl von Sitzen 3 zur Befestigung von auswechselbaren Schneideinsätzen 4 ausgebildet ist. Der Grundkörper 2 weist ein erstes Ende 21 auf, das dazu ausgebildet ist, mit einer Aufnahme einer Bearbeitungsmaschine, insbesondere z.B. einer Fräsmaschine, verbunden zu werden. Das erste Ende 21 kann dabei insbesondere mit entsprechenden Verbindungselementen versehen sein, die eine direkte Verbindung mit der Aufnahme der Bearbeitungsmaschine ermöglichen, oder für eine mittelbare Verbindung über ein oder mehrere zusätzliche Komponenten.

Die Sitze 3 für die Befestigung der auswechselbaren Schneideinsätze 4 sind an einem von dem ersten Ende 21 abgewandten zweiten Ende 22 des Grundkörpers 2 ausgebildet. Der Grundkörper 2 weist eine Rotationsachse R auf, um die das Werkzeug 1 im Betrieb rotiert. Das zweite Ende 22 weist bei dem dargestellten Ausführungsbeispiel einen größeren Außenumfang als das erste Ende 21 auf, wie insbesondere in Fig. 1 zu sehen ist. Die Sitze 3 sind über den Außenumfang am zweiten Ende 22 derart verteilt angeordnet, dass in den Sitzen befestigte Schneideinsätze 4 sowohl in axialer als auch in radialer Richtung (bezüglich der Rotationsachse R) über den Grundkörper 2 vorstehen, wie z.B. in Fig. 2 zu sehen ist.

Als Ausführungsbeispiel ist beispielhaft ein rotierendes Werkzeug 1 dargestellt, bei dem vierzehn auswechselbare Schneideinsätze 4 über den Umfang verteilt angeordnet sind. Es ist jedoch zu beachten, dass die vorliegende Beschreibung nicht auf diese Anzahl beschränkt ist, sondern z.B. auch (deutlich) weniger oder (deutlich) mehr Schneideinsätze 4 vorgesehen sein können. Obwohl in dem dargestellten Ausführungsbeispiel sämtliche Schneideinsätze 4 in Positionen und Ausrichtungen angeordnet sind, die sich im Wesentlichen entsprechen und durch Rotation um die Rotationsachse R ineinander übergeführt werden können, ist es - je nach Anwendung - z.B. auch möglich, dass die Schneideinsätze verschiedene Positionen und/oder Ausrichtungen aufweisen.

Wie insbesondere in Fig. 1 zu sehen ist, sind die Schneideinsätze 4 bei der Ausführungsform jeweils durch eine Befestigungsschraube 5 an dem Sitz 3 befestigt. Der Gewindeabschnitt der Befestigungsschraube 5 ist dabei durch eine Bohrung in dem Schneideinsatz 4 geführt und in eine entsprechende Gewindebohrung in dem Grundkörper 2 eingeschraubt. Bei der dargestellten Ausführungsform sind die Schneideinsätze 4 tangential gespannt angeordnet, d.h. die jeweiligen Haupterstreckungsebenen der Schneideinsätze 4 erstrecken sich im Wesentlichen tangential an den Außenumfang des Grundkörpers 2. Die Gewindeabschnitte der Befestigungsschrauben 5 und die entsprechenden Gewindebohrungen erstrecken sich dabei bei dem Ausführungsbeispiel im Wesentlichen in radialer Richtung. Es ist zu beachten, dass sich die Gewindeabschnitte nicht exakt in radialer Richtung erstrecken müssen, sondern auch unter einem Winkel zu der radialen Richtung verlaufen können.

Der Grundkörper 2 des rotierenden Werkzeugs 1 ist mit einem Kühlmittelkanal 6 zur Zuführung von Kühl- und/oder Schmiermittel versehen, der sich ausgehend von dem ersten Ende 21 in den Grundkörper 2 erstreckt. Das erste Ende 21 ist derart ausgebildet, dass Kühl- und/oder Schmiermittel in den Kühlmittelkanal 6 zuführbar ist. Bei dem Ausführungsbeispiel erstreckt sich der Kühlmittelkanal 6 zumindest im Wesentlichen koaxial zu der Rotationsachse R.

Wie in den Fig. 1 und Fig. 2 zu sehen ist, erstreckt sich ausgehend von der Stirnseite an dem zweiten Ende 22 des Grundkörpers 2 eine trichterförmige Ausnehmung 7 in den Grundkörper 2. Die trichterförmige Ausnehmung 7 erstreckt sich bis zu dem Kühlmittelkanal 6 und mündet in den Kühlmittelkanal 6. Die Ausnehmung 7 schließt derart an den Kühlmittelkanal 6 an, dass sie gleichmäßig in den Kühlmittelkanal 6 übergeht. Die Innenwand der trichterförmigen Ausnehmung 7 ist der Rotationsachse R zugewandt konvex ausgewölbt ausgebildet, so dass sich die Innenwand mit zunehmendem Abstand von dem Kühlmittelkanal 6 zunehmend stark von der Rotationsachse entfernt. Mit anderen Worten geht die Innenwand der trichterförmigen Ausnehmung 7 von einer zumindest nahezu axialen Ausrichtung angrenzend an den Kühlmittelkanal 6 mit zunehmendem Abstand von dem Kühlmittelkanal 6 immer mehr in eine radiale Ausrichtung über, weitet sich somit gekrümmt trichterförmig auf. Wie insbesondere in Fig. 2 zu sehen ist, geht die trichterförmige Ausnehmung 7 frei von sprungartigen Querschnittsveränderungen glatt in den Kühlmittelkanal 6 über.

Wie in Fig. 1 zu sehen ist, ist die trichterförmige Ausnehmung 7 im Bereich des zweiten Endes 22 des Grundkörpers 2 mit erhabenen Strukturen 7a versehen, zwischen denen sich kanalartige Vertiefungen 7b zu Kühlmittelauslassbereichen 8 erstrecken. Wie in Fig. 1 zu sehen ist, sind die Kühlmittelauslassbereiche 8 den jeweiligen Sitzen 3 zugeordnet und dienen dazu, den dort befestigten Schneideinsätzen 4 im Betrieb gezielt Kühlmittel zuzuführen. Obwohl in dem Ausführungsbeispiel den jeweiligen Sitzen 3 jeweils ein Kühlmittelauslassbereich 8 zugeordnet ist, ist es z.B. auch möglich, für einzelne Sitze 3 mehrere Kühlmittelauslassbereiche 8 auszubilden oder gemeinsame Kühlmittelauslassbereiche 8 für mehrere Sitze 3 auszubilden.

Wie in Fig. 1 weiter zu sehen ist, sind im Bereich der trichterförmigen Ausnehmung 7 mehrere Gewindebohrungen 9 in den Grundkörper 2 eingebracht, deren Funktion noch eingehender beschrieben wird. Bei dem dargestellten Ausführungsbeispiel sind die Gewindebohrungen 9 im Bereich der erhabenen Strukturen 7a ausgebildet.

Wie insbesondere in Fig. 2 gut zu erkennen ist, weist das Werkzeug 1 ferner einen Deckel 10 auf. Der Deckel 10 ist derart angeordnet, dass er die trichterförmige Ausnehmung 7 an der Stirnseite an dem zweiten Ende 22 des Grundkörpers 2 mit Ausnahme von den Kühlmittelauslassbereichen 8 verschließt. Wie in Fig. 2 zu sehen ist, ist der Deckel 10 über Schrauben 11, die mit den Gewindebohrungen 9 zusammenwirken, fest mit dem Grundkörper 2 verbunden.

Der Deckel 10 ist auf der Innenseite mit einem Vorsprung 12 versehen, der in die trichterförmige Ausnehmung 7 ragt. Die Wand des Vorsprungs 12 ist an die Form der trichterförmigen Ausnehmung 7 derart angepasst, dass zwischen der Innenwand der Ausnehmung 7 und der Wand des Vorsprungs 12 ein Ringspalt 13 gebildet ist. Der Vorsprung 12 weist in etwa die Form einer bezüglich der Rotationsachse R rotationssymmetrischen Pyramide mit konkav eingewölbten Seiten auf. Die Basisfläche der Pyramide bildet dabei den Grund des Werkzeugs 1 und die Wand des Vorsprungs 12 verläuft mit abnehmendem Abstand zu dem Kühlmittelkanal 6 immer steiler bis zu einer abgerundeten Spitze. Der Vorsprung 12 verjüngt sich somit in Richtung des Kühlmittelkanals 6 zunehmend. Dabei ist auch die Wand des Vorsprungs 12 frei von sprungartigen Querschnittsveränderungen.

Der Radius des zwischen dem Vorsprung 12 und der trichterförmigen Ausnehmung 7 eingeschlossenen Ringspalts 13 vergrößert sich somit mit zunehmendem Abstand von dem Kühlmittelkanal 6. Andererseits verringert sich in dieser Richtung der Abstand zwischen der Wand des Vorsprungs 12 und der Innenwand der trichterförmigen Ausnehmung 7, so
dass sich der Querschnitt bzw. die Breite des Ringspalts 13 mit zunehmendem Abstand von dem Kühlmittelkanal 6 verringert. In dieser Weise ist verhindert, dass sich der gesamte für das Kühlmittel zur Verfügung stehende Querschnitt stark ändert. Somit ist eine gleichförmige Kühlmittelströmung durch den Ringspalt 13 ermöglicht.

In Richtung der Kühlmittelauslassbereiche 8 liegt die Wand des Vorsprungs 12 an den erhabenen Strukturen 7a der trichterförmigen Ausnehmung 7 an, so dass dort kein Kühlmittel zwischen dem Deckel 10 und dem Grundkörper 2 hindurchströmen kann. In dem Bereich der kanalartigen Vertiefungen 7b der trichterförmigen Ausnehmung 7 sind zwischen dem Vorsprung 12 und der Ausnehmung 7 Kühlmittelverteilerkanäle 14 ausgebildet, die den Ringspalt 13 mit den jeweiligen Kühlmittelauslassbereichen 8 fluidtechnisch verbinden. In dieser Weise wird gezielt Kühlmittel zu den Kühlmittelauslassbereichen 8 geleitet. Der Deckel 10 wirkt folglich unter Ausbildung der Kühlmittelverteilerkanäle 14 mit der Ausnehmung 7 zusammen.

Obwohl bei dem Ausführungsbeispiel die erhabenen Strukturen 7a an der trichterförmigen Ausnehmung 7 ausgebildet sind, so
dass die kanalartigen Vertiefungen 7b in der trichterförmigen Ausnehmung 7 ausgebildet sind, ist es z.B. auch möglich, die trichterförmige Ausnehmung 7 vollkommen glatt auszubilden und derartige Strukturen, wie insbesondere kanalartige Vertiefungen, an dem Vorsprung 12 des Deckels 10 vorzusehen, um die Kühlmittelverteilerkanäle 14 auszubilden. Ferner ist es auch möglich, sowohl in der Ausnehmung 7 als auch an dem Vorsprung 12 Strukturen vorzusehen, die gemeinsam die Kühlmittelverteilerkanäle 14 ausbilden.

Insgesamt ist die Kühlmittelführung von dem Kühlmittelkanal 6, über den Ringspalt 13 und die Kühlmittelverteilerkanäle 14 zu den Kühlmittelaustrittsbereichen 8 derart ausgebildet, dass das Kühlmittel frei von abrupten Richtungsänderungen zu den Kühlmittelaustrittsbereichen 8 strömen kann bzw. geleitet wird. Aufgrund dieser Ausgestaltung ist auch bei einer Minimalmengenkühlung und/oder -schmierung eine Entmischung des Kühl- und/oder Schmiermittels zuverlässig verhindert. Ferner treten keine Reibungswiderstände auf, die eine zuverlässige Zufuhr von Kühl- und/oder Schmiermitteln mit geringen Massenströmen aufgrund der niedrigen treibenden Druckdifferenzen stören könnten.

## Patentansprüche

1. Rotierendes Werkzeug (1) zur spanenden Bearbeitung, aufweisend:
einen Grundkörper (2) mit einem ersten Ende (21) zur Verbindung mit einer Aufnahme einer Bearbeitungsmaschine und einem zweiten Ende (22) mit einer Mehrzahl von Sitzen (3) für eine Befestigung von auswechselbaren Schneideinsätzen (4),
einen Kühlmittelkanal (6) zur Zuführung von Kühl- und/oder Schmiermittel ausgehend von dem ersten Ende (21),
eine ausgehend von einer Stirnseite des Grundkörpers (2) an dem zweiten Ende (22) ausgebildete trichterförmige Ausnehmung (7), die sich mit zunehmendem Abstand von dem zweiten Ende (22) in Richtung des ersten Endes (21) trichterförmig zunehmend verjüngt und in den Kühlmittelkanal (6) mündet, und
einen Deckel (10), der die trichterförmige Ausnehmung (7) außer in einer Mehrzahl von den Sitzen (3) zugeordneten Kühlmittelaustrittsbereichen (8) stirnseitig verschließt und einen in die trichterförmige Ausnehmung (7) ragenden Vorsprung (12) aufweist,
**dadurch gekennzeichnet, dass** zwischen dem Vorsprung (12) und einer Innenseite der trichterförmigen Ausnehmung (7) ein Ringspalt (13) gebildet ist, dessen Querschnitt sich in einer Ebene, die eine Rotationsachse (R) des Grundkörpers (2) enthält, mit zunehmendem Abstand von dem Kühlmittelkanal (6) verjüngt, sodass der Abstand zwischen der Innenseite der Ausnehmung (7) und dem Vorsprung (12) mit zunehmendem Abstand von dem Kühlmittelkanal (6) abnimmt.

2. Rotierendes Werkzeug nach Anspruch 1, wobei sich der Vorsprung (12) in Richtung des Kühlmittelkanals (6) zunehmend verjüngt.

3. Rotierendes Werkzeug nach einem der vorangehenden Ansprüche, wobei die trichterförmige Ausnehmung (7) frei von sprungartigen Querschnittsveränderungen in den Kühlmittelkanal (6) mündet.

4. Rotierendes Werkzeug nach einem der vorangehenden Ansprüche, wobei die Kühlmittelführung von dem Kühlmittelkanal (6) zu den Kühlmittelaustrittsbereichen (8) derart ausgebildet ist, dass das Kühlmittel frei von abrupten Richtungsänderungen zu den Kühlmittelaustrittsbereichen (8) leitbar ist.

5. Rotierendes Werkzeug nach einem der vorangehenden Ansprüche, wobei die trichterförmige Ausnehmung (7) einen sich mit zunehmendem Abstand von dem zweiten Ende (22) kontinuierlich verjüngenden Querschnitt aufweist.

6. Rotierendes Werkzeug nach einem der vorangehenden Ansprüche, wobei der Deckel (10) unter Ausbildung von zu den Kühlmittelaustrittsbereichen (8) verlaufenden Kühlmittelverteilerkanälen (14) mit der trichterförmigen Ausnehmung (7) zusammenwirkt.

7. Rotierendes Werkzeug nach Anspruch 6, wobei die Kühlmittelverteilerkanäle (14) durch Strukturen (7a, 7b) in der trichterförmigen Ausnehmung (7) des Grundkörpers (2) und/oder Strukturen in dem in die Ausnehmung (7) ragenden Vorsprung (12) des Deckels (10) gebildet sind.

8. Rotierendes Werkzeug nach einem der vorangehenden Ansprüche, wobei die Mehrzahl von Sitzen (3) an einem Außenumfang des zweiten Endes (22) angeordnet ist.

9. Rotierendes Werkzeug nach einem der vorangehenden Ansprüche, wobei die Mehrzahl von Sitzen (3) dazu ausgebildet ist, auswechselbare Schneideinsätze (4) in einer tangential gespannten Ausrichtung aufzunehmen.

10. Rotierendes Werkzeug nach einem der vorangehenden Ansprüche, wobei die Mehrzahl von Sitzen (3) derart ausgebildet ist, dass darin befestigte auswechselbare Schneideinsätze (4) sowohl in einer axialen Richtung als auch in einer radialen Richtung über den Grundkörper (2) hervorstehen.

11. Rotierendes Werkzeug nach einem der vorangehenden Ansprüche, wobei das zweite Ende (22) des Grundkörpers (2) einen größeren Außenumfang als das erste Ende (21) aufweist.

12. Rotierendes Werkzeug nach einem der vorangehenden Ansprüche, das als Fräswerkzeug ausgebildet ist.

## Claims

1. Rotary tool (1) for machining, having:
a main body (2) with a first end (21) for connecting to a receptacle of a machine tool, and a second end (22) having a plurality of seats (3) for fastening exchangeable cutting inserts (4),
a coolant duct (6) for feeding coolant and/or lubricant starting from the first end (21),
a funnel-shaped recess (7) formed at the second end (22) starting from an end face of the main body (2), said recess (7) narrowing increasingly in a funnel shape with increasing distance from the second end (22) in the direction of the first end (21) and leading into the coolant duct (6), and
a cover (10) which closes the funnel-shaped recess (7) at the end face apart from in a plurality of coolant outlet regions (8) assigned to the seats (3) and has a protrusion (12) projecting into the funnel-shaped recess (7),
**characterized in that**, between the protrusion (12) and an inner side of the funnel-shaped recess (7), an annular gap (13) is formed, the cross section of which narrows, with increasing distance from the coolant duct (6), in a plane which contains a rotation axis (R) of the main body (2), such that the distance between the inner side of the recess (7) and the protrusion (12) decreases with increasing distance from the coolant duct (6).

2. Rotary tool according to Claim 1, wherein the protrusion (12) narrows increasingly in the direction of the coolant duct (6).

3. Rotary tool according to either of the preceding claims, wherein the funnel-shaped recess (7) leads into the coolant duct (6) in a manner free of sudden cross-sectional changes.

4. Rotary tool according to one of the preceding claims, wherein the coolant conduct from the coolant duct (6) to the coolant outlet regions (8) is configured such that the coolant is able to be passed to the coolant outlet regions (8) in a manner free of abrupt changes in direction.

5. Rotary tool according to one of the preceding claims, wherein the funnel-shaped recess (7) has a cross section that narrows continuously with increasing distance from the second end (22).

6. Rotary tool according to one of the preceding claims, wherein the cover (10) cooperates with the funnel-shaped recess (7), forming coolant distribution ducts (14) extending to the coolant outlet regions (8).

7. Rotary tool according to Claim 6, wherein the coolant distribution ducts (14) are formed by structures (7a, 7b) in the funnel-shaped recess (7) in the main body (2) and/or structures in the protrusion (12), projecting into the recess (7), of the cover (10).

8. Rotary tool according to one of the preceding claims, wherein the plurality of seats (3) are arranged at an outer circumference of the second end (22) .

9. Rotary tool according to one of the preceding claims, wherein the plurality of seats (3) are configured to receive exchangeable cutting inserts (4) in a tangentially clamped orientation.

10. Rotary tool according to one of the preceding claims, wherein the plurality of seats (3) are configured such that exchangeable cutting inserts (4) fastened therein protrude beyond the main body (2) both in an axial direction and in a radial direction.

11. Rotary tool according to one of the preceding claims, wherein the second end (22) of the main body (2) has a larger outer circumference than the first end (21).

12. Rotary tool according to one of the preceding claims, which is in the form of a milling tool.

## Revendications

1. Outil rotatif (1) pour l'usinage par enlèvement de copeaux, comprenant:
un corps de base (2) avec une première extrémité (21) pour l'assemblage à un logement d'une machine d'usinage et une seconde extrémité (22) dotée d'une multiplicité de sièges (3) pour une fixation d'inserts de coupe remplaçables (4),
un canal de fluide de refroidissement (6) pour l'arrivée de fluide de refroidissement et/ou de lubrifiant à partir de la première extrémité (21),
un évidement en forme d'entonnoir (7) formé à partir d'un côté frontal du corps de base (2) à la seconde extrémité (22), qui se rétrécit de plus en plus en forme d'entonnoir avec l'augmentation de la distance depuis la seconde extrémité (22) en direction de la première extrémité (21) et qui débouche dans le canal de fluide de refroidissement (6), et
un couvercle (10), qui ferme frontalement l'évidement en forme d'entonnoir (7) sauf dans une multiplicité de zones de sortie de fluide de refroidissement (8) associées aux sièges (3) et qui présente une protubérance (12) saillante dans l'évidement en forme d'entonnoir (7),
**caractérisé en ce qu'**une fente annulaire (13) est formée entre la protubérance (12) et un côté intérieur de l'évidement en forme d'entonnoir (7), dont la section transversale se rétrécit dans un plan, qui contient un axe de rotation (R) du corps de base (2), avec l'augmentation de la distance depuis le canal de fluide de refroidissement (6), de telle manière que la distance entre le côté intérieur de l'évidement (7) et la protubérance (12) diminue avec l'augmentation de la distance depuis le canal de fluide de refroidissement (6) .

2. Outil rotatif selon la revendication 1, dans lequel la protubérance (13) se rétrécit de plus en plus en direction du canal de fluide de refroidissement (6).

3. Outil rotatif selon l'une quelconque des revendications précédentes, dans lequel l'évidement en forme d'entonnoir (7) débouche dans le canal de fluide de refroidissement (6) sans variations brusques de section transversale.

4. Outil rotatif selon l'une quelconque des revendications précédentes, dans lequel le guidage du fluide de refroidissement depuis le canal de fluide de refroidissement (6) jusqu'aux zones de sortie de fluide de refroidissement (8) est configuré de telle manière que du fluide de refroidissement puisse être conduit sans changements brusques de direction jusqu'aux zones de sortie de fluide de refroidissement (8).

5. Outil rotatif selon l'une quelconque des revendications précédentes, dans lequel l'évidement en forme d'entonnoir (7) présente une section transversale qui se rétrécit en continu avec l'augmentation de la distance à partir de la seconde extrémité (22).

6. Outil rotatif selon l'une quelconque des revendications précédentes, dans lequel le couvercle (10) coopère avec l'évidement en forme d'entonnoir (7) en formant des canaux de distribution de fluide de refroidissement (14) s'étendant jusqu'aux zones de sortie de fluide de refroidissement (8).

7. Outil rotatif selon la revendication 6, dans lequel les canaux de distribution de fluide de refroidissement (14) sont formés par des structures (7a, 7b) dans l'évidement en forme d'entonnoir (7) du corps de base (2) et/ou par des structures dans la protubérance (12) du couvercle (10) saillante dans l'évidement (7).

8. Outil rotatif selon l'une quelconque des revendications précédentes, dans lequel la multiplicité de sièges (3) sont disposés sur un pourtour extérieur de la seconde extrémité (22).

9. Outil rotatif selon l'une quelconque des revendications précédentes, dans lequel la multiplicité de sièges (3) sont configurés de façon à recevoir des inserts de coupe remplaçables (4) dans une orientation serrée tangentiellement.

10. Outil rotatif selon l'une quelconque des revendications précédentes, dans lequel la multiplicité de sièges (3) sont configurés de telle manière que des inserts de coupe remplaçables (4) fixés dans ceux-ci soient en saillie sur le corps de base (2) aussi bien dans une direction axiale que dans une direction radiale.

11. Outil rotatif selon l'une quelconque des revendications précédentes, dans lequel la seconde extrémité (22) du corps de base (2) présente un pourtour extérieur plus grand que la première extrémité (21).

12. Outil rotatif selon l'une quelconque des revendications précédentes, qui est constitué par un outil de fraisage.
